# EUROPEAN PATENT APPLICATION

(11) **EP 1 519 522 A2**
(43) Date of publication of application: **30.03.2005**
(21) Application number: 04021053.6
(22) Date of filing: 03.09.2004
(51) Int. Cl.: H04L 12/56, H04Q 7/38

(54) **Wireless communication apparatus and method for voice communications in wireless personal area network**

(30) Priority: 23.09.2003 KR 2003065818
(71) Applicant: Samsung Electronics Co., Ltd., Suwon-si, Gyeonggi-do (KR)
(72) Inventor: Jeong, Min-seop, Seocho-gu Seoul (KR); Oh, Seung-hwan, Paldal-gu Suwon-si Gyeonggi-do (KR)
(74) Representative: Grünecker, Kinkeldey, Stockmair & Schwanhäusser Anwaltssozietät

(57) **Abstract**

A wireless communication apparatus and method for voice communications in the wireless personal area network. The present wireless communication apparatus and method is applied to a network environment to which plural devices are connected and which is synchronized by a synchronization signal broadcast from any of the plural devices. In such a network environment, the present invention includes allocating time slots for the voice communications between first and second devices of the plural devices, inserting information on the allocated time slots to the synchronization signal, and broadcasting the synchronization signal to the plural devices; sending and receiving voice data between the first and second devices to and from the allocated time slots; and releasing the allocated time slots if the sending and receiving of the voice data is terminated. Through such a wireless communication , the voice communications can be achieved in the personal area network environment based on the IEEE 802.15.4 standard.

## Description

### CROSS-REFERENCE TO RELATED APPLICATION

This application claims the benefit of Korean Patent Application No. 2003-65818, filed on September 23, 2003, in the Korean Intellectual Property Office, the disclosure of which is incorporated herein by reference.

### BACKGROUND OF THE INVENTION

### 1. Field of the Invention

Methods and apparatuses consistent with the present invention relate to a wireless communication method, and more particularly, to a wireless communication method for voice communications in a wireless personal area network based on the IEEE 802.15.4 standard.

### 2. Description of the Related Art

The Wireless Personal Area Network (WPAN) has emerged in the area of implementing an existing personal area network in a wireless manner. The PAN standing for a personal area network is a concept in contrast to the Local Area Network (LAN) or the Wide Area Network (WAN) that are widely known, and means that each individual has his/her own network. That is, each device belonging to one individual constitutes one network for the purpose of his/her convenience.

In an effort to implement such PAN in a wireless manner, the IEEE 802.15 working group established the WPAN as the short-range wireless network standard, and puts four task groups (TGs) thereunder. The IEEE 802.15.1 is the well-known Bluetooth, the IEEE 802.15.3 and IEEE 802.15.3a are the high-rate WPAN, and the IEEE 802.15.4, so-called ZigBee, is designed as the standard for a low-rate WPAN below 250kbps.

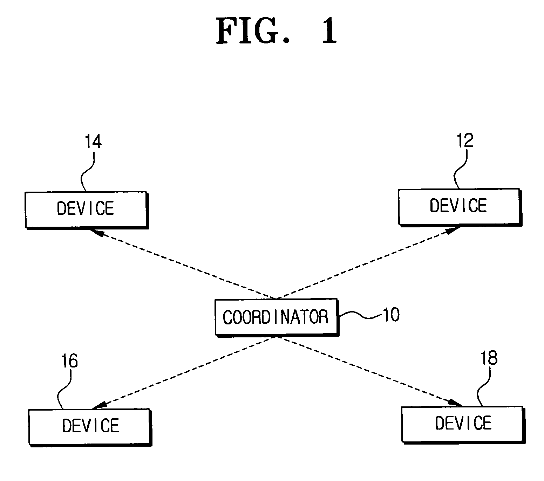

FIG. 1 is a view for showing a structure of a general Wireless Personal Area Network. Referring to FIG. 1, plural devices 10, 12, 14, 16, and 18 constitute one network, and any one of the plural devices 10 to 18 is designated as a coordinator 10. The coordinator 10 broadcasts to the remaining devices 12, 14, 16, and 18 a beacon which is a synchronization signal so as to synchronize the devices 12, 14, 16, and 18 connected to the Wireless Personal Area Network.

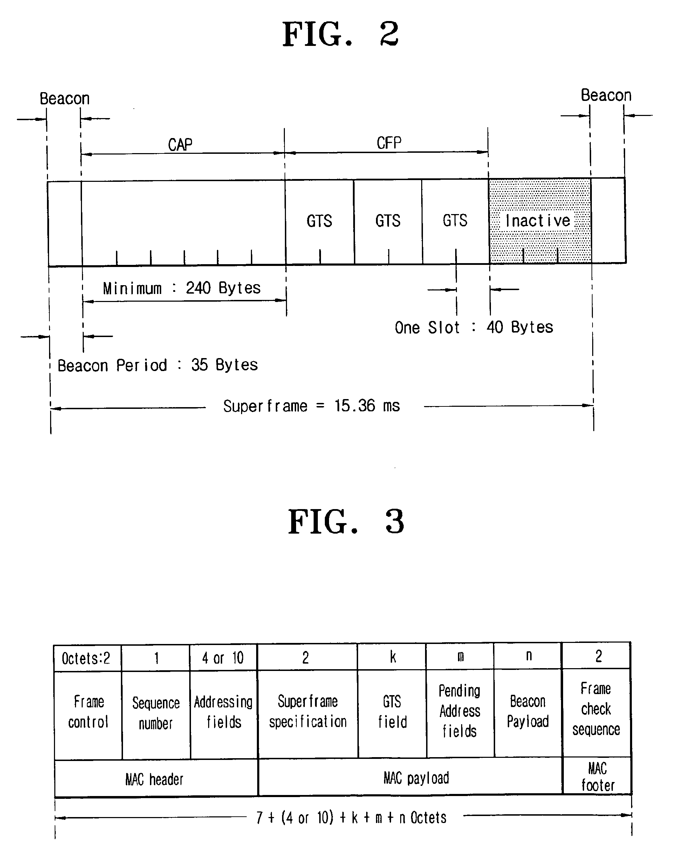

FIG. 2 is a view for showing a superframe structure used for wireless communications in a Wireless Personal Area Network environment based on the IEEE 802.15.4 standard, and FIG. 3 is a view for showing a beacon structure in the superframe of FIG. 2.

The Wireless Personal Area Network based on the IEEE 802.15.4 standard can selectively operate a superframe mode, and the coordinator in the superframe broadcasts a beacon in a pre-scheduled interval. In FIG. 2, a minimum period of the superframe is 15.36ms, and has to maintain a 240-byte period at least for a contention access period (CAP) called contention period. Further, the time between two beacons is divided into 16 identical time slots regardless of the superframe period. The devices can send and receive data anytime during a time slot, but has to complete sending and receiving corresponding data before the sending of a next beacon. The devices contend with each other for time slot channel access, and the coordinator can allocate a time slot to a device requiring a designated bandwidth or a low process delay. Such an allocated time slot is called a Guaranteed Time Slot (GTS), the number of GTSs allocated without contention can vary depending upon the requests of related devices, and a maximum seven GTSs can be used.

As shown in FIG. 3, the structure of a beacon used as a synchronous signal includes a Frame control field, a Sequence number, Addressing fields, a Superframe specification field, a GTS field, Pending address fields, a Beacon payload field, and a Frame check sequence field. The beacon length varies as shown in FIG. 3, and detailed specifications on the respective fields constituting the beacon are defined in the IEEE 802.15.4 standard documentation. A period more than 35 bytes is necessary to send such a beacon.

However, since voice communications are not taken into consideration by the wireless communication method based on the existing IEEE 802.15.4 standard, the superframe is not structured to be suitable for voice communications. That is, voice data has to be sent at a transmission speed of about 64kbps for smooth voice communications, which means that about 10-byte voice data has to be sent at every 1.25ms. Accordingly, a channel has to be established to send and receive voice data of about 123 bytes for the minimum superframe period of 15.36ms. However, as stated above, when an interval for sending beacons within the superframe period and a CAP interval to be guaranteed are considered, it is impossible to send and receive voice data to provide smooth voice communications. Further, the wireless communication method based on the existing IEEE 802.15.4 standard does not have extra commands established to request or terminate voice communications. Therefore, voice communications become impossible when the wireless communication method based on the existing IEEE 802.15.4 standard is used.

### SUMMARY OF THE INVENTION

Accordingly, it is an aspect of the present invention to provide a wireless communication method and apparatus enabling voice communications in a Wireless Personal Area Network based on the IEEE 802.15.4 standard.

In order to achieve the above aspect, in a network to which plural devices are connected and which is synchronized by a synchronization signal broadcast from any of the plural devices, a wireless communication method is provided. In particular, a method according to a non-limiting, illustrative embodiment of the present invention comprises steps of allocating time slots for voice communications between first and second devices of the plural devices, inserting information on the allocated time slots to the synchronization signal, and broadcasting the synchronization signal to the plural devices; sending and receiving voice data between the first and second devices to and from the allocated time slots; and releasing the allocated time slots if the sending and receiving of the voice data is terminated. At this time, the network can be a low-rate wireless personal area network (WPAN) based on the IEEE 802.15.4 standard.

The broadcast step can be performed by any of the first and second devices, and it is contemplated that the synchronization signal is a superframe beacon for superframe mode operations.

The allocated time slots include time slots for sending the voice data and time slots for receiving the voice data. At this time, the superframe period is 15.3ms, and, in the superframe period, two time slots are allocated for the time slots sending the voice data and for the time slots receiving the voice data, respectively, so that channels for the voice communications can be allocated.

The time slots for the voice communications may start being allocated with a request of a voice communication start by any of the first and second devices, and a pairing procedure is performed between the first and second devices before the request of the voice communication start to undergo authentication. Further, the allocated time slots can start being released with a request of a voice communication termination by any of the first and second devices.

Additionally contemplated is a wireless communication apparatus for voice communications in a network to which plural devices are connected and which is synchronized by a synchronization signal broadcasted from any of the plural devices. The apparatus includes means for allocating time slots for the voice communications between first and second devices of the plural devices. Means for inserting information on the allocated time slots to the synchronization signal is provided along with means for broadcasting the synchronization signal to the plural devices. Further included are means for sending and receiving voice data between the first and second devices to and from the allocated time slots and means for releasing the allocated time slots if the sending and receiving of the voice data is terminated.

### BRIEF DESCRIPTION OF THE DRAWINGS

Exemplary embodiments of the invention will be described in detail with reference to the following drawings in which like reference numerals refer to like elements, and wherein:

FIG. 1 is a view for showing a structure of a general Wireless Personal Area Network;

FIG. 2 is a view for showing a superframe structure based on the existing IEEE 802.15.4;

FIG. 3 is a view for showing a structure of the beacon in the superframe structure of FIG. 2;

FIG. 4 is a view for showing a superframe structure used in a wirelesscommunication method according to a non-limiting embodiment of the present invention;

FIG. 5 is a view for showing a beacon structure in the superframe structure of FIG. 4;

FIG. 6 is a view for showing a data format for sending voice data used in the wireless communication method according to a non-limiting embodiment of the present invention;

FIG. 7 is a view for showing a structure of a voice command used in the wireless communication method according to a non-limiting embodiment of the present invention;

FIG. 8 is a view for explaining a low-powered communication mode in the wireless communication method according to a non-limiting embodiment of the present invention;

FIG. 9 is a block diagram for schematically showing a communication system using the wireless communication method according to a non-limiting embodiment of the present invention; and

FIG. 10 is a view for explaining a process for voice communications between a mobile phone and a headset in use of the wireless communication method according to a non-limiting embodiment of the present invention.

### DETAILED DESCRIPTION OF ILLUSTRATIVE, NON-LIMITING EMBODIMENTS OF THE INVENTION

Hereinafter, the present invention will be described in detail with reference to the accompanying drawings.

The wireless communication method and apparatus according to the present invention is applied to the Wireless Personal Area Network environment based on the IEEE 802.15.4 standard, as an example, but not restricted to the environment, and is also applicable to other network environments satisfying the conditions according to the present invention.

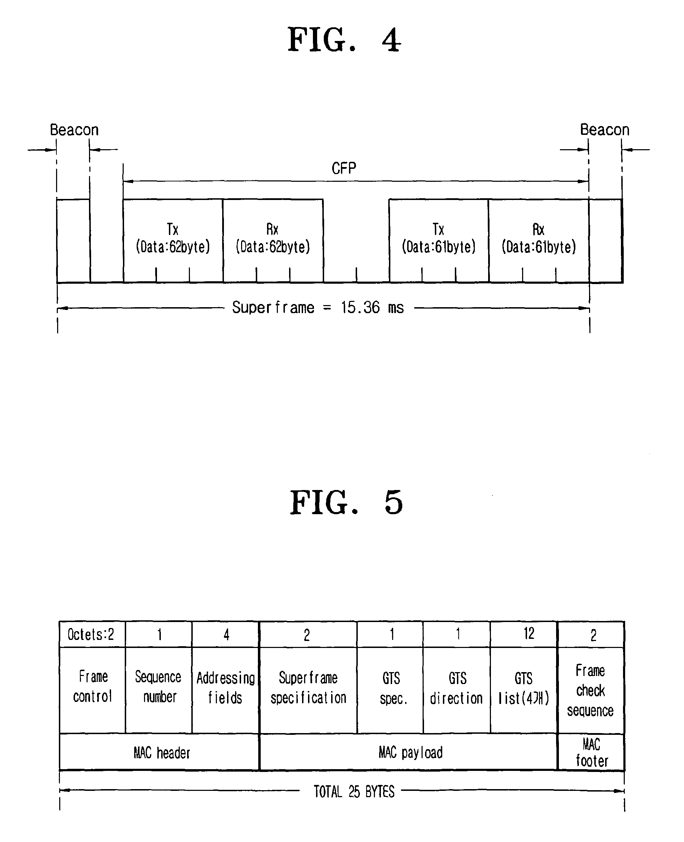

FIG. 4 is a view for showing a superframe structure according to an embodiment of the present invention. Referring to FIG. 4, a superframe is allocated with two beacons, two GTS slots Tx's for sending voice data, and two GTS slots Rx's for receiving voice data. A superframe period is 15.36ms, and uses the same period as the minimum superframe period based on the existing IEEE 802.15.4 standard so that the IEEE 802.15.4 standard is satisfied. Further, voice data at a transmission speed of about 64kbps, that is, voice data of about 10 bytes per 1.25ms has to be sent and received for natural voice communications, and, in order to satisfy such conditions and minimize voice data delay, time slots are allocated in order for 62-byte and 61-byte voice data to be sent and received through respective GTS slots, that is, in order for total 123-byte voice data to be sent and received.

FIG. 5 is a view for showing a beacon structure in the superframe structure of FIG. 4. In FIG. 5, the beacon is structured with a Frame control field, a Sequence number field, Addressing fields, a Superframe specification field, a GTS specification field, a GTS direction field, GTS list fields, and a Frame check sequence field, and the total length of the beacon becomes 25 bytes. The beacon used in the wireless communication method and apparatus according to the present invention is basically identical to a structure of the beacon based on the IEEE 802.15.4 standard shown in FIG. 3. However, there exists a difference in the GTS field structure in that four GTSs are allocated for one device in order for voice data to be sent and received.

In more detail, first, the GTS fields are divided into the GTS specification, GTS direction, and GTS list fields. In the GTS specification field, bits 0-2 indicate a GTS descriptor count, bits 3-6 are reserved, and a bit 7 denotes a GTS permit. In the GTS direction field, bits 0-6 denote a GTS direction mask, and a bit 7 is reserved. The GTS specification field and the GTS direction field have the same definition as those defined in the IEEE 802.15.4 standard.

Maximum seven GTSs can be used in the GTS list field based on the IEEE 802.15.4 standard. However, in the case of wireless communication according to the present invention, since four total GTSs are allocated in the superframe period and 3 bytes are used for each GTS, total 12 bytes are used. Of the 3 bytes allocated to each GTS, bits 0-15 denote a device short address, bits 16-19 a GTS starting slot, and bits 20-23 a GTS length. By using such a superframe beacon, four GTSs can be allocated for voice communications.

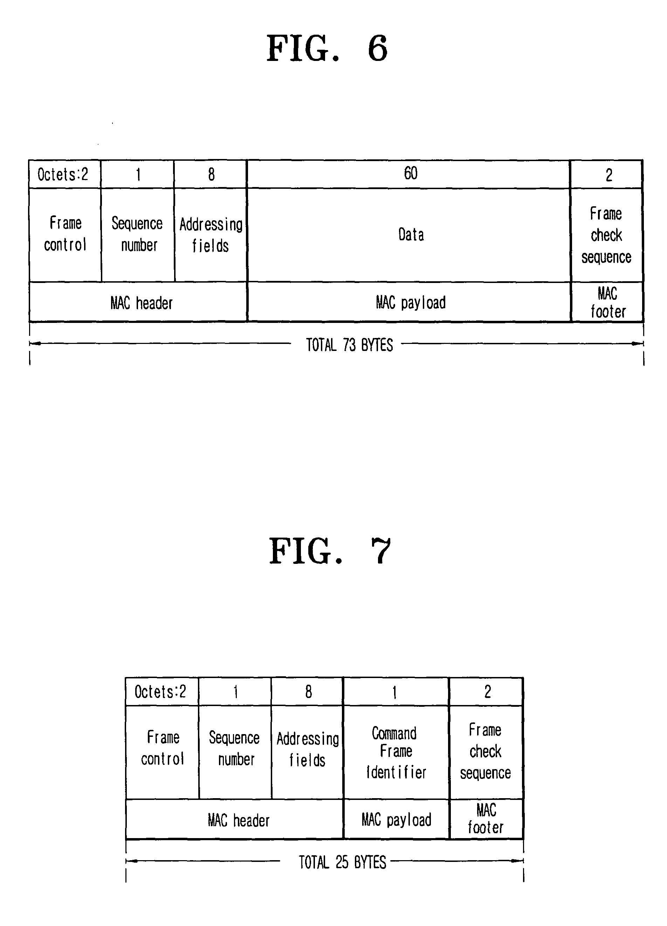

FIG. 6 shows a data format used for sending and receiving voice data used in the wireless communication method according to an embodiment of the present invention. Referring to FIG. 6, the data format includes a Frame control field, a Sequence number field, Addressing fields, a data field, and a Frame check sequence field. The data field carries voice data so that the voice data is sent and received, and the other fields are based on the IEEE 802.15.4.

FIG. 7 is a view for showing a structure of a voice command used in the wireless communication method according to an embodiment of the present invention. The present voice command is used for notifying the start and end of the voice communications in wireless communication according to the present invention. Referring to FIG. 7, the voice command includes a Frame control field, a Sequence number field, a MAC header field consisting of Addressing fields, a Command frame Identifier field, and a Frame check sequence field. The fields except for the Command frame Identifier field are the same as defined in the IEEE 802.15.4 standard.

The Command frame Identifier field has a value of 0x10 when the start of the voice communications is requested, and a value of 0x11 when notification is given of the end of the voice communications.

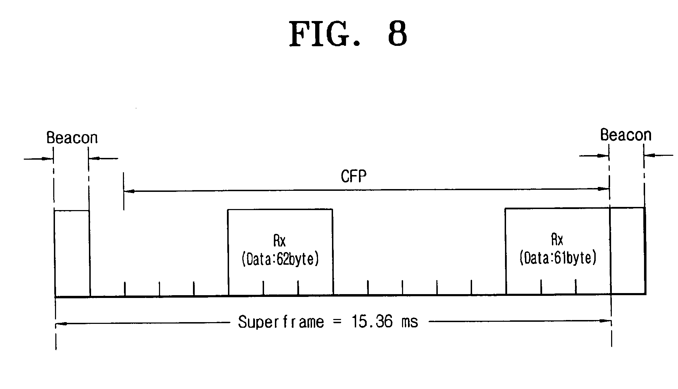

FIG. 8 is a view for explaining a low-powered communication mode capable of reducing power consumption in wireless communication according to an embodiment of the present invention. As shown in FIG. 8, if no voice data exists over a certain level in the voice communications such as where there is no voice data to be sent, time slots can be temporarily deleted which are allocated to send corresponding voice data. Accordingly, power consumption in this interval can be reduced so that low-powered operations become possible.

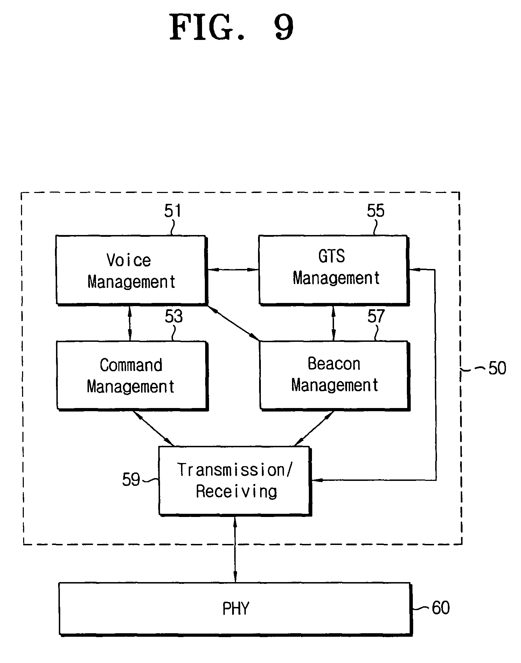

FIG. 9 is a block diagram for illustrating a wireless communication system which uses the wireless communication method according to the present invention. Referring to FIG. 9, the wireless communication system 50 has a voice management unit 51, a command management unit 53, a GTS management unit 55, a beacon management unit 57, and a transmission/receiving unit 59. The command management unit 53 performs functions related to command generations, and the GTS management unit 55 performs functions related to the GTS management. The beacon management unit 57 performs functions related to the generations of beacons to be sent, and the transmission/receiving unit 59 is in charge of sending and receiving signals through a physical layer 60. The functions of such blocks are the same as defined in the IEEE 802.15.4 standard documentation, for example.

The voice management unit 51 performs functions of setting and releasing four time slots allocated to send and receive voice data. Further, the voice management unit 51 performs functions of generating and interpreting voice commands, and, if there does not exist voice data to be sent during the voice communications, the voice management unit 51 performs functions of adjusting beacons to temporarily delete allocated time slots in order not to send null data.

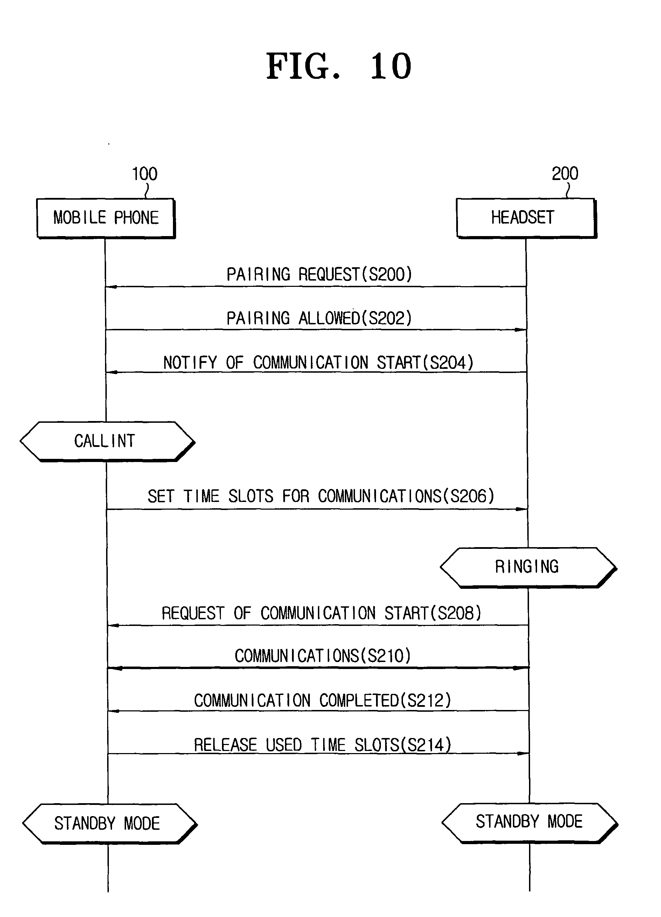

FIG. 10 is a view for explaining a process for performing voice communications between a mobile phone and a headset in use of the wireless communication method according to the present invention. In here, the mobile phone 100 is used as a master, and the headset 200 is used as a slave, and the mobile phone 100 and the headset 200 perform wireless communications based on the IEEE 802.15.4 standard.

Referring to FIG. 10, first, the headset 200 sends a pairing request to the mobile phone 100 which is the master (S200). The pairing is performed for authentication between the mobile phone 100 and the headset 200. The mobile phone 100 verifies the headset 200 requesting the pairing, checks whether the headset 200 is a reliable device which is communication-allowed, and allows the pairing if conditions are met (S202). If such pairing procedures are completed, the mobile phone 100 and the headset 200 can communicate with each other.

The headset 200 notifies the mobile phone 100 of the communication start (S204), so the mobile phone 100 sets time slots for communications after calling (S206). The time slots are set by using the superframe shown in FIG. 4. If the mobile phone 100 first sends a request for voice communications, the time slots for the voice communications can be requested to be set by using voice commands, as shown in FIG. 6.

If the time slots for the communications are set, the headset 200 sends a request for the communication start to the mobile phone 100 with a communication button and the like pressed (S208). Thereafter, voice data is sent and received through the set time slots so that voice communications are performed (S210). If desired communications are terminated, the headset 200 sends a voice command to the mobile phone 100 for a request of the voice communication termination (S212). Accordingly, the mobile phone 100 releases the time slots set for the voice communications (S214), and returns to a general stand-by mode. Likewise, the headset 200 returns to the stand-by mode. Through such procedures, the wireless communications can be performed between the mobile phone 100 and the headset 200 as well as the voice communications can be performed if necessary, based on the IEEE 802.15.4 standard.

As stated above, the present invention enables voice communications in the personal area network environment based on the IEEE 802.15.4 standard. Further, the wireless communication method and apparatus according to the present invention enable wireless communications based on the basic IEEE 802.15.4 standard, and can be operated at a low cost and at a low power compared to wireless LANs or Bluetooth since channels allocated for the voice communications can be released if necessary.

Although illustrative embodiments of the present invention has been described, it will be understood by those skilled in the art that the present invention should not be limited to the described embodiments, but various changes and modifications can be made within the spirit and scope of the present invention as defined by the appended claims.

## Claims

1. A wireless communication method for voice communications in a network to which plural devices are connected and which is synchronized by a synchronization signal broadcasted from any of the plural devices, comprising steps of:
allocating time slots for the voice communications between first and second devices of the plural devices, inserting information on the allocated time slots to the synchronization signal, and broadcasting the synchronization signal to the plural devices;
sending and receiving voice data between the first and second devices to and from the allocated time slots; and
releasing the allocated time slots if the sending and receiving of the voice data is terminated.

2. The wireless communication method as claimed in claim 1, wherein the network is a low-rate wireless personal area network (WPAN) based on the IEEE 802.15.4 standard.

3. The wireless communication method as claimed in claim 2, wherein the broadcast step is performed by any of the first and second devices.

4. The wireless communication method as claimed in claim 2, wherein the synchronization signal is a superframe beacon for superframe mode operations.

5. The wireless communication method as claimed in claim 2, wherein the allocated time slots include time slots for sending the voice data and time slots for receiving the voice data.

6. The wireless communication method as claimed in claim 4, wherein a superframe period is 15.3ms, and, in the superframe period, two time slots are allocated for the time slots sending the voice data and for the time slots receiving the voice data, respectively.

7. The wireless communication method as claimed in claim 2, wherein the time slots for the voice communications start being allocated with a request of a voice communication start by any of the first and second devices.

8. The wireless communication method as claimed in claim 7, wherein a pairing procedure is performed between the first and second devices before the request of the voice communication start.

9. The wireless communication method as claimed in claim 2, wherein the allocated time slots start being released with a request of a voice communication termination by any of the first and second devices.

10. The wireless communication method as claimed in claim 6, wherein the time slots for sending the voice data and receiving the voice data are respectively allocated in order for 62-byte and 61-byte voice data.

11. The wireless communication method as claimed in claim 2, wherein four time slots are allocated for at least one of the first and second devices in order for voice data to be sent and received.

12. A wireless communication apparatus for voice communications in a network to which plural devices are connected and which is synchronized by a synchronization signal broadcasted from any of the plural devices, comprising:
means for allocating time slots for the voice communications between first and second devices of the plural devices;
means for inserting information on the allocated time slots to the synchronization signal;
means for broadcasting the synchronization signal to the plural devices; and
means for sending and receiving voice data between the first and second devices to and from the allocated time slots; and
means for releasing the allocated time slots if the sending and receiving of the voice data is terminated.

13. The wireless communication apparatus as claimed in claim 12, wherein the network is a low-rate wireless personal area network (WPAN) based on the IEEE 802.15.4 standard.

14. The wireless communication apparatus as claimed in claim 13, wherein the broadcasting is performed by any of the first and second devices.

15. The wireless communication apparatus as claimed in claim 13, wherein the synchronization signal is a superframe beacon for superframe mode operations.

16. The wireless communication apparatus as claimed in claim 13, wherein the allocated time slots include time slots for sending the voice data and time slots for receiving the voice data.

17. The wireless communication apparatus as claimed in claim 16, wherein the superframe period is 15.3ms, and, in the superframe period, two time slots are allocated for the time slots sending the voice data and for the time slots receiving the voice data, respectively.

18. The wireless communication apparatus as claimed in claim 13, wherein the time slots for the voice communications start being allocated with a request of a voice communication start by any of the first and second devices.

19. The wireless communication apparatus as claimed in claim 18, wherein the first and second devices are paired before the request of the voice communication start.

20. The wireless communication apparatus as claimed in claim 13, wherein the allocated time slots are released with a request of a voice communication termination by any of the first and second devices.

21. The wireless communication apparatus as claimed in claim 17, wherein the time slots for sending the voice data and receiving the voice data are respectively allocated in order for 62-byte and 61-byte voice data.

22. The wireless communication apparatus as claimed in claim 13, wherein four time slots are allocated for at least one of the first and second devices in order for voice data to be sent and received.
